# EUROPEAN PATENT SPECIFICATION

(11) **EP 1 239 450 B1**
(45) Date of publication and mention of the grant of the patent: **28.02.2007**
(21) Application number: 02290585.5
(22) Date of filing: 08.03.2002
(51) Int. Cl.: G09G 3/36, H04N 5/20

(54) **Reducing sparkle artifacts with low brightness filtering**
Verminderung von Funkelartefakten mit Filterung der niedrigen Helligkeitswerte
Réduction des artefacts de scintillement avec filtrage de la luminance faible

(30) Priority: 09.03.2001 US 803485
(43) Date of publication of application: 11.09.2002
(73) Proprietor: Thomson Licensing, 92100 Boulogne-Billancourt (FR)
(72) Inventor: Willis, Donald Henry, Indianapolis, IN 46250 (US); Hague, John Alan, Indianapolis, IN 46220 (US)
(74) Representative: Ruellan-Lemonnier, Brigitte

(56) References cited:
- EP-A- 1 225 558
- EP-A- 1 239 449
- EP-A- 1 249 817
- EP-A- 1 339 039
- US-A- 4 799 105
- US-A1- 2002 126 079

## Description

### Background of the Invention

### 1. Field of the Invention

This invention relates to the field of video systems utilizing a liquid crystal display (LCD), and in particular, to video systems utilizing normally white liquid crystal on silicon imagers.

### 2. Description of Related Art

Liquid crystal on silicon (LCOS) can be thought of as one large liquid crystal formed on a silicon wafer. The silicon wafer is divided into an incremental array of tiny plate electrodes. A tiny incremental region of the liquid crystal is influenced by the electric field generated by each tiny plate and the common plate. Each such tiny plate and corresponding liquid crystal region are together referred to as a cell of the imager. Each cell corresponds to an individually controllable pixel. A common plate electrode is disposed on the other side of the liquid crystal. Each cell, or pixel, remains lighted with the same intensity until the input signal is changed, thus acting as a sample and hold. The pixel does not decay, as is the case with the phosphors in a cathode ray tube. Each set of common and variable plate electrodes forms an imager. One imager is provided for each color, in this case, one imager each for red, green and blue.

A microdisplay system is described in EP1225558A1, which falls under Article 54(3) EPC, to Three Five Systems Inc. More specifically, this patent application discloses a method for reducing flicker in a microdisplay including steps of storing video image data of a video source (528) in a buffer (520, 522), retrieving video image data from the buffer and writing data onto a display device (500).

It is typical to drive the imager of an LCOS display with a frame-doubled signal to avoid 30 Hz flicker, by sending first a normal frame (positive picture) and then an inverted frame (negative picture) in response to a given input picture. The generation of positive and negative pictures ensures that each pixel will be written with a positive electric field followed by a negative electric field. The resulting drive field has a zero DC component, which is necessary to avoid the image sticking, and ultimately, permanent degradation of the imager. It has been determined that the human eye responds to the average value of the brightness of the pixels produced by these positive and negative pictures.

The drive voltages are supplied to plate electrodes on each side of the LCOS array. In the presently preferred LCOS system to which the inventive arrangements pertain, the common plate is always at a potential of about 8 volts. This voltage can be adjustable. Each of the other plates in the array of tiny plates is operated in two voltage ranges. For positive pictures, the voltage varies between 0 volts and 8 volts. For negative pictures the voltage varies between 8 volts and 16 volts.

The light supplied to the imager, and therefore supplied to each cell of the imager, is field polarized. Each liquid crystal cell rotates the polarization of the input light responsive to the root mean square (RMS) value of the electric field applied to the cell by the plate electrodes. Generally speaking, the cells are not responsive to the polarity (positive or negative) of the applied electric field. Rather, the brightness of each pixel's cell is generally only a function of the rotation of the polarization of the light incident on the cell. As a practical matter, however, it has been found that the brightness can vary somewhat between the positive and negative field polarities for the same polarization rotation of the light. Such variation of the brightness can cause an undesirable flicker in the displayed picture.

In this embodiment, in the case of either positive or negative pictures, as the field driving the cells approaches a zero electric field strength, corresponding to 8 volts, the closer each cell comes to white, corresponding to a full on condition. Other systems are possible, for example where the common voltage is set to 0 volts. It will be appreciated that the inventive arrangements taught herein are applicable to all such positive and negative field LCOS imager driving systems.

Pictures are defined as positive pictures when the variable voltage applied to the tiny plate electrodes is less than the voltage applied to the common plate electrode, because the higher the tiny plate electrode voltage, the brighter the pixels. Conversely, pictures are defined as negative pictures when the variable voltage applied to the tiny plate electrodes is greater than the voltage applied to the common plate electrode, because the higher the tiny plate electrode voltage, the darker the pixels. The designations of pictures as positive or negative should not be confused with terms used to distinguish field types in interlaced video formats.

The present state of the art in LCOS requires the adjustment of the common-mode electrode voltage, denoted VITO, to be precisely between the positive and negative field drive for the LCOS. The subscript ITO refers to the material indium tin oxide. The average balance is necessary in order to minimize flicker, as well as to prevent a phenomenon known as image sticking.

A light engine having an LCOS imager has a severe non-linearity in the display transfer function, which can be corrected by a digital lookup table, referred to as a gamma table. The gamma table corrects for the differences in gain in the transfer function. Notwithstanding this correction, the strong non-linearity of the LCOS imaging transfer function for a normally white LCOS imager means that dark areas have a very low light-versus-voltage gain. Thus, at lower brightness levels, adjacent pixels that are only moderately different in brightness need to be driven by very different voltage levels. This produces a fringing electrical field having a component orthogonal to the desired field. This orthogonal field produces a brighter than desired pixel, which in turn can produce undesired bright edges on objects. The presence of such orthogonal fields is denoted declination. The image artifact caused by declination and perceived by the viewer is denoted sparkle. The areas of the picture in which declination occurs appear to have sparkles of light over the underlying image. In effect, dark pixels affected by declination are too bright, often five times as bright as they should be. Sparkle comes in red, green and blue colors, for each color produced by the imagers. However, the green sparkle is the most evident when the problem occurs. Accordingly, the image artifact caused by declination is also referred to as the green sparkle problem.

LCOS imaging is a new technology and green sparkle caused by declination is a new kind of problem. Various proposed solutions proposed by others include signal processing the entire luminance component of the picture, and in so doing, degrade the quality of the entire picture. The trade-off for reducing declination and the resulting sparkle is a picture with virtually no horizontal sharpness at all. Picture detail and sharpness simply cannot be sacrificed in that fashion.

One skilled in the art would expect the sparkle artifact problem attributed to declination to be addressed and ultimately solved in the imager as that is where the declination occurs. However, in an emerging technology such as LCOS, there simply isn't an opportunity for parties other than the manufacturer of the LCOS imagers to fix the problem in the imagers. Moreover, there is no indication that an imager-based solution would be applicable to all LCOS imagers. Accordingly, there is an urgent need to provide a solution to this problem that can be implemented without modifying the LCOS imagers.

The features in the preambles of the independent claims are disclosed in US 4799105.

### Brief Summary of the Invention

The inventive arrangements taught herein solve the problem of sparkle in liquid crystal imagers attributed to declination without degrading the high definition sharpness of the resulting display. Moreover, and absent an opportunity to address the problem by modification of liquid crystal imagers, the inventive arrangements advantageously solve the sparkle problem by modifying a video signal to be displayed, thus advantageously presenting a solution that can be applied to all imagers, including LCOS imagers. The video signal can be, for example, an input luminance signal or a video drive signal. Any reduction in detail is advantageously and adjustably limited to dark scenes, even very dark scenes. The video signal is signal processed in such a way that higher brightness level information is advantageously unchanged, thus retaining high definition detail. At the same time, the lower brightness levels of the video signal that directly result in sparkle are processed or filtered in such a way that the sparkle is advantageously prevented altogether, or at least, is reduced to a level that cannot be perceived by a viewer. The signal processing or filtering of the lower brightness level information advantageously does not adversely affect the detail of the high definition display. Moreover, the signal processing or filtering advantageously can be adjusted or calibrated in accordance with the non-linearity of any gamma table, and thus, can be used with and adjustably fine tuned for different LCOS imagers in different video systems.

In a presently preferred embodiment, the video signal of a picture is decomposed into a higher brightness level signal and a lower brightness level signal. The demarcation between higher and lower brightness levels is adjustable and preferably related to the transition between the lower and higher gain portions of the gamma table. The lower brightness level signal is low pass filtered to reduce the difference in brightness levels between adjacent pixels. The higher brightness level signal is delayed in time to match the processing delay through the low pass filter. The delay matched higher brightness level signal and the low pass filtered lower brightness level signal are then combined to form a modified video signal.

In a video display system the luminance signal can be modified and supplied to a color space converter, also referred to as a matrix, together with the R-Y and B-Y chrominance signals. The chrominance signals are also delayed to match the delay through the sparkle reduction circuit. Sparkle reduction processing of the luminance signal has been found to reduce the sparkle problem by about 60% to 70%.

The outputs of the color space converter are video drive signals, for example, R G B, supplied to the LCOS imager. In another embodiment, one or two or all of the video drive signals are also subjected to the same sparkle reduction processing as is the luminance signal. Video drive signals that are not sparkle reduced must be delay matched. The modified video drive signals are then supplied to the liquid crystal imager. When all of the video drive signals are further processed, the sparkle problem has been found to be reduced by about 85% to 90%. Each decomposer advantageously has an independently selectable brightness level threshold.

In yet another embodiment, the luminance signal is not sparkle reduced, but one or two or all of the video drive signals are processed for sparkle reduction. Video drive signals that are not sparkle reduced must be delay matched.

In each embodiment, the sparkle reduction processing changes the brightness levels of the pixels in the lowest brightness levels, corresponding to the highest gain portion of the gamma table, in such a way as to reduce the occurrence of declination in the imager. A threshold for the luminance signal decomposer, for example, can be expressed as a digital fraction, for example a digital value of 60 out of a range of 255 digital steps (60/255), as would be present in an 8-bit signal. The threshold can also be expressed in IRE, which ranges from 0 to 100 in value, 100 IRE representing maximum brightness. The IRE level can be calculated by multiplying the digital fraction by 100. The IRE scale is a convenient way to normalize and compare brightness levels between signals having different numbers of bits. The value of 60, for example, corresponds approximately to 24 IRE. In a presently preferred embodiment, the threshold value for the luminance decomposer is 8, corresponding to approximately 3.1 IRE.

### Brief Description of the Drawings

Figure 1 is a block diagram of a sparkle reducing circuit in accordance with the inventive arrangements.
Figure 2 is a block diagram useful for explaining the operation of a decomposer in Figure 1.
Figure 3 is a block diagram useful for explaining the operation of a delay matching circuit and a low pass filter in Figure 1.
Figure 4 is a block diagram of a portion of a video display system incorporating different combinations of sparkle reducing circuits.
Figures 5(a)-5(e) are waveforms useful for explaining the operation of the sparkle reducing circuit.

### Detailed description of the Preferred Embodiments

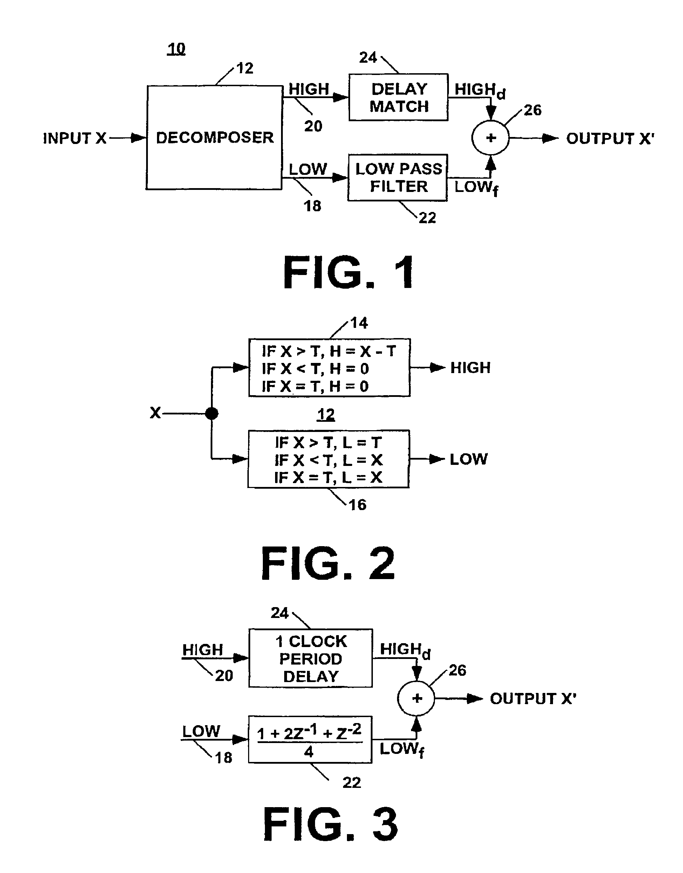

A circuit for reducing sparkle artifacts attributed to declination errors in liquid crystal video systems, for example LCOS video systems, is shown in Figure 1 and generally denoted by reference numeral 10. The circuit comprises a decomposer 12, a low pass filter 22, a delay match circuit 24 and an algebraic unit 26. An input video signal X, for example a luminance signal or a video drive signal, is modified by the circuit 10, and in response, an output video signal X' is generated. The video signal is a digital signal, and the waveform is a succession of digital samples representing brightness levels. The output signal X' has a similar digital format. The decomposer 12 generates a higher brightness level signal 20 and a lower brightness level signal 18. The operation of decomposer 12 is illustrated in Figure 2.

With reference to Figure 2, a block 14 has a first set of rules for generating the higher brightness level signal. The input signal X represents a succession of brightness level samples defining a luminance input signal. The brightness level of each sample can be expressed numerically as a digital value or an IRE level, for example 60/255 or 24 IRE, as explained above. The letter T represents a threshold value, which can also be expressed as a digital value or an IRE level. If X is greater than T, then the brightness level H of the higher brightness level signal is equal to X minus T. If X is less than T, then the brightness level H of the higher brightness level signal is equal to 0.

A block 16 has a second set of rules for generating the lower brightness level signal. If X is greater than T, then the brightness level L of the lower brightness level signal is equal to the threshold T. If X is less than T, then the brightness level L of the lower brightness level signal is equal to X.

It may be noted that when X = T, the output of block 14 will be the same whether X is defined as less than or equal to T, or X is defined as greater than or equal to T. In each case, H is equal to 0. It may also be noted that when X = T, the output of block 16 will be the same whether X is defined as less than or equal to T, or X is defined as greater than or equal to T. In each case, L is equal to X.

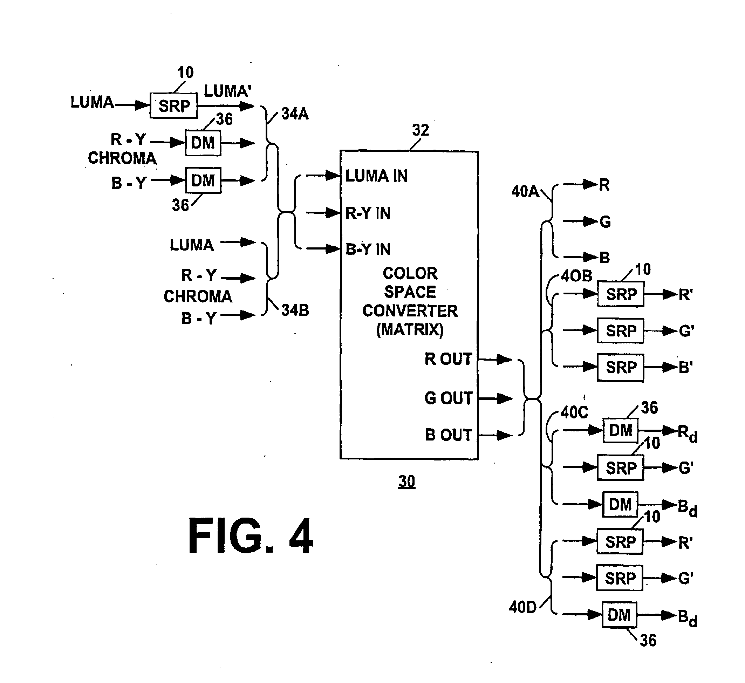

Referring again to Figure 1, the lower brightness level signal 18 is an input to the low pass filter 22. The higher brightness level signal 20 is an input to the delay match circuit 24. The details of the low pass filter 22 and the delay match circuit 24 are shown in Figure 3. Low pass filter 22 is embodied as a normalized 1:2:1 Z-transform. The low pass filtering incurs a one clock period delay, and accordingly, the delay match circuit 24 provides a one clock period delay for the higher brightness level signal. The low pass filtered lower brightness level signal, denoted LOWf, and the delayed higher brightness level signal denoted HIGH_{d} are combined in an algebraic unit 26, which generates the output signal X'.

A video system 30 shown in Figure 4 illustrates various combinations in which video signals, for example luminance signals and video drive signals, can be processed for sparkle reduction. A color space converter, or matrix, 32 generates video drive signals, for example RGB, responsive to a luminance signal, denoted LUMA, and chrominance signals, denoted CHROMA. The chrominance signals are more particularly designated R-Y and B-Y.

Two sets of inputs to the color space converter 32 are denoted 34A and 34B. In set 34A the LUMA signal input is modified by sparkle reduction processor (SRP) 10 to generate LUMA'. The CHROMA signals are delayed by delay match (DM) circuits 36. In set 34B the LUMA signal is not modified and the CHROMA signals are not delay matched.

Four sets of outputs from the color space converter 32 are denoted 40A, 40B, 40C and 40D. In set 40A the video drive signals RGB are not modified. In set 40B, each one of the RGB video drive signals is modified by a sparkle reduction processor 10. No delay matching is necessary. In set 40C only one of the video drive signals, for example G, is modified by sparkle reduction processor 10 to generate G'. The remaining video drive signals are delayed by delay matching circuits 36. In set 40D only two of the video drive signals, for example R and G, are modified by sparkle reduction processors 10 to generate R' and G'. The remaining video drive signal is delayed by delay matching circuit 36. Input set 34A can be used with any one of output sets 40A, 40B, 40C or 40D. Input set 34B can be used with any one of output sets 40B, 40C or 40D. The combination of input set 34B and output set 40A does not include sparkle reduction processing.

It has been found that using the combination of input set 34A and output set 40A reduces the sparkle artifact attributed to declination by about 60% to 70%. It has also been found that using the combination of input set 34A and output set 40B reduces the sparkle artifact attributed to declination by about 85% to 90%. This substantial reduction advantageously solves the sparkle problem for all practical purposes. It should be appreciated that although the sparkle reduction processing circuits in Figure 4 can be identical to one another, the threshold value for each of these sparkle reduction processors can advantageously be independently selected. This enables the sparkle reduction processing to be fine tuned to the different video signals.

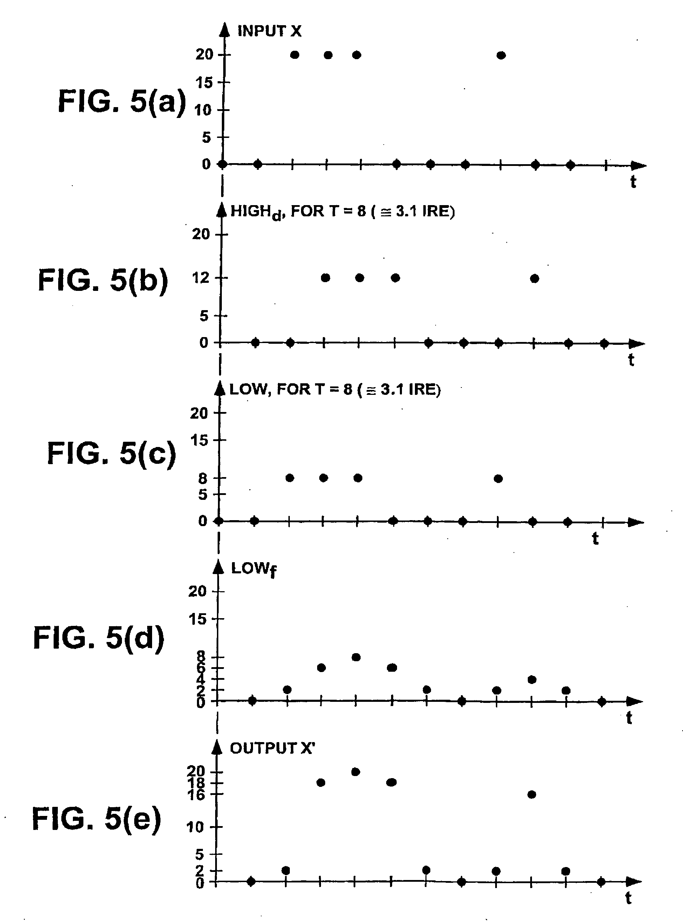

The response of circuit 10 in Figure 1 to a specific input signal is illustrated in Figures 5(a) through 5(e). For purposes of illustration, the threshold T is set to the digital value or state of 8, corresponding to approximately 3.1 IRE for an 8-bit signal. The waveforms of Figures 5(a)-5(e) are aligned in time to demonstrate the delay incurred by the low pass filtering and the delay match circuit. The first samples in each of Figures 5(a) and 5(c) are aligned with one another. The first samples of Figures 5(b), 5(d) and 5(f) are aligned with one another.

In Figure 5(a) an input signal X has the luminance values shown by the black dots. Each black dot represents a sample of a luminance value as an input to the decomposer 12. Each sample represents the brightness level of a pixel. The signal X can be seen as including a pulse followed by an impulse. The threshold value of T, as explained in connection with the rules of Figure 2, is equal to 8 in this example.

The first two values of X are 0. In accordance with block 14, the value of the delay matched higher brightness level signal HIGH_{d} shown in Figure 5(b) is 0 because X is less than T. The next three input values are 20. The corresponding levels of the higher brightness level signal in Figure 5(b) are 12 because the output value equals the input value minus the threshold value (X-T). The remaining sample values are calculated in the same fashion.

With reference to Figure 5(c), the first two output values of the lower brightness level signal LOW are 0, because the input is less than the threshold and the output equals the input. The next three output values are equal to 8 because the input value is greater than that threshold, and in this case, the output equals the threshold value. The remaining samples are calculated in the same fashion.

Figure 5(d) represents the output LOWf of low pass filter 22 responsive to the signal shown in Figure 5(c). The values are shown as indicated, and it can be noted that the pulse and impulse which are still evident in the wave form of Figure 5(c) have been considerably smoothed, or rolled off, by the low pass filtering.

Finally, Figure 5(e) is the output signal X', which is the sum of the wave forms in Figures 5(b) and 5(d). It can be noted from the wave form in Figure 5(e) that the essential character of the pulse and of the impulse in the input wave form X been retained in the output wave form X, but sharp edges or transitions between adjacent sample values have been advantageously reduced. Only the very dark areas of the picture are noticeably affected by the sparkle reduction processing, as evidenced by the very low value of the threshold limit. Accordingly, the high definition horizontal resolution is advantageously maintained.

The methods and apparatus illustrated herein teach how the brightness levels of adjacent pixels can be restricted or limited in the horizontal direction, and indeed, these methods and apparatus solve the sparkle problem. Nevertheless, these methods and apparatus can also be extended to restricting or limiting brightness levels of adjacent pixels in the vertical direction, or in both the horizontal and vertical directions.

## Claims

1. A method for reducing sparkle artifacts in a liquid crystal display, **characterized by** steps of:
dividing a video signal (INPUT X) for a picture into a higher brightness level signal (HIGH) and a lower brightness level signal (LOW)by comparing said video signal to a brightness threshold (T);
low pass filtering (in 22) said lower brightness level signal;
delaying (in 24) said higher brightness level signal to match a processing delay incurred by said low pass filtering; and,
combining (in 26) said low pass filtered lower brightness level signal (LOW_{f}) and said delay matched higher brightness level signal (HIGH_{d}) to generate a modified video signal (OUTPUT X') less likely to result in sparkle artifacts in said display.

2. The method of claim 1, comprising the step of dividing said video signal in accordance with a transition between lower and higher gain portions of a gamma table associated with said display.

3. The method of claim 1, wherein said dividing step comprises the steps of:
comparing successive input brightness levels of said video signal to said brightness threshold;
for each said input brightness level greater than said threshold in said comparing step, assigning to said higher brightness level signal a brightness level equal to a difference between said greater input brightness level and said threshold (in 14) and assigning to said lower brightness level signal a brightness level equal to said threshold (in 16) ; and,
for each said input brightness level less than said threshold in said comparing step, assigning to said higher brightness level signal a brightness level equal to zero (in 14) and assigning to said lower brightness level signal a brightness level equal to said input brightness level (in 16).

4. The method of claim 3, comprising the steps of:
assigning to said higher brightness level signal a brightness level equal to zero if said input brightness level is equal to said threshold (in 14); and,
assigning to said lower brightness level signal a brightness level equal to said input brightness level if said input brightness level is equal to said threshold (in 16).

5. The method of claim 1, comprising the step of low pass filtering said lower brightness level signal in accordance with a normalized 1:2:1 Z-transform (Fig. 3, in 22), said lower brightness level signal being thereby subjected to a time delay.

6. The method of claim 5, comprising the step of delaying said higher brightness level signal by said time delay (Fig. 3, in 24).

7. The method of claim 1, comprising the steps of:
applying said sparkle reducing steps to a luminance signal (LUMA) for said picture;
delaying (using 36) chrominance signals for said picture; and,
generating a plurality of video drive signals (R OUT, G OUT, B OUT) from said modified luminance signal and said delayed chrominance signals.

8. The method of claim 7, comprising the steps of:
applying (using 10) said sparkle reducing steps to at least one of said video drive signals; and,
delaying (using 36) all non-sparkle-reduced video drive signals.

9. The method of claim 1, comprising the steps of:
generating (using 32) a plurality of video drive signals (R OUT, G OUT, B OUT) from luminance and chrominance signals;
applying said sparkle reducing steps (using 10) to at least one of said video drive signals; and,
delaying (using 36) all non-sparkle-reduced video drive signals.

10. The method of claim 7, comprising the step of applying said sparkle reducing steps to each of said video drive signals.

11. A circuit for reducing sparkle artifacts in a liquid crystal display, **characterized by**:
means (12) for dividing a video signal for a picture into a higher, with respect to a brightness threshold (T), brightness level signal (HIGH) and a lower with respect to said brightness threshold (T), brightness level signal (LOW);
means (22) for low pass filtering said lower brightness level signal;
means (24) for delaying said higher brightness level signal.to match a processing delay incurred by said low pass filtering; and,
means (26) for combining said low pass filtered lower brightness level signal and said delay matched higher brightness level signal to generate a modified video signal (OUTPUT X') less likely to result in sparkle artifacts in said display.

12. The circuit of claim 11, wherein said dividing means comprises:
a register (in 14, 16) for storing a selected threshold value (T);
a comparator (X>T, X<T, X=T) for comparing successive input brightness levels of said video signal to said selected threshold value;
an algebraic circuit for subtracting (X-T) said threshold value from every one of said input brightness levels greater than said threshold (X>T) ;
a clipping circuit for limiting to said threshold value every one of said input brightness levels greater than said threshold value (IF X>T, L=T);
a first gate for propagating a zero value brightness level for every one of said input brightness levels less than said threshold value (IF X<T, H=O);
a second gate for propagating said input brightness level for every one of said input brightness levels less than said threshold (IF X<T, L=X); and,
said higher brightness signal (HIGH) is formed by outputs from said algebraic circuit and said first gate and said lower brightness level signal (LOW) is formed by outputs from said clipping circuit and said second gate.

13. The circuit of claim 12, wherein:
said higher brightness level signal (HIGH) is formed by said output of said first gate when said input brightness level is equal to said threshold value (IF X=T, H=O); and,
said lower brightness level signal (LOW) is formed by said output of said second gate when said input brightness level is equal to said threshold value (IF X=T, L=X).

14. The circuit of claim 11, wherein said threshold value relates to a transition between lower and higher gain portions of a gamma table associated with said display.

15. The circuit of claim 11, wherein said means (22) for low pass filtering applies a normalized 1:2:1 Z-transform to said lower brightness level signal, said lower brightness level signal being thereby subjected to a time delay.

16. The circuit of claim 15, wherein said higher brightness level signal is delayed by said time delay.

17. The circuit of claim 11, further comprising:
means (36) for delaying chrominance signals for said picture; and,
means (32) for generating a plurality of video drive signals (R OUT, G OUT, B OUT) from a modified luminance signal and said delayed chrominance signals.

## Patentansprüche

1. Verfahren zum Reduzieren von Sparkle-Artefakten in einem Flüssigkristalldisplay, **gekennzeichnet durch** die folgenden Schritte:
Trennen eines Videosignals (INPUT X) für ein Bild in ein Signal (HIGH) mit höherem Helligkeitsniveau und ein Signal (LOW) mit niedrigerem Helligkeitsniveau **durch** Vergleichen des Videosignals mit einem Helligkeitsschwellwert (T);
Tiefpaßfiltern (in 22) des Signals mit niedrigerem Helligkeitsniveau;
Verzögern (in 24) des Signals mit höherem Helligkeitsniveau zur Anpassung einer **durch** die Tiefpaßfilterung verursachten Verarbeitungsverzögerung und
Verknüpfen (in 26) des tiefpaßgefilterten Signals (LOW_{f}) mit niedrigerem Helligkeitsniveau und des verzögerungsangepaßten Signals (HIGH_{d}) mit höherem Helligkeitsniveau, um ein modifiziertes Videosignal (OUTPUT X') zu erzeugen, das mit geringerer Wahrscheinlichkeit zu Sparkle-Artefakten in dem Display führt.

2. Verfahren nach Anspruch 1, umfassend den Schritt des Trennens des Videosignals gemäß einem Übergang zwischen Abschnitten einer mit dem Display assoziierten Gammatabelle mit niedrigerer und höherer Verstärkung.

3. Verfahren nach Anspruch 1, wobei der Trennschritt die folgenden Schritte umfaßt:
Vergleichen aufeinanderfolgender eingegebener Helligkeitsniveaus des Videosignals mit dem Helligkeitsschwellwert;
für jedes besagte Helligkeitsniveau über dem Schwellwert in dem Vergleichsschritt Zuweisen eines Helligkeitsniveaus gleich einer Differenz zwischen dem größeren eingegebenen Helligkeitsniveau und dem Schwellwert (in 14) zu dem Signal mit höherem Helligkeitsniveau und Zuweisen eines Helligkeitsniveaus gleich dem Schwellwert (in 16) zu dem Signal mit niedrigerem Helligkeitsniveau und
für jedes besagte eingegebene Helligkeitsniveau kleiner als der Schwellwert in dem Vergleichsschritt Zuweisen eines Helligkeitsniveaus gleich 0 (in 14) zu dem Signal mit höherem Helligkeitsniveau und Zuweisen eines Helligkeitsniveaus gleich dem besagten eingegebenen Helligkeitsniveau (in 16) zu dem Signal mit niedrigerem Helligkeitsniveau.

4. Verfahren nach Anspruch 3, umfassend die folgenden Schritte:
Zuweisen eines Helligkeitsniveaus gleich 0 zu dem Signal mit dem höheren Helligkeitsniveau, wenn das eingegebene Helligkeitsniveau gleich dem Schwellwert ist (in 14); und
Zuweisen eines Helligkeitsniveaus gleich dem eingegebenen Helligkeitsniveau zu dem Signal mit den niedrigeren Helligkeitsniveau, wenn das eingegebene Helligkeitsniveau gleich dem Schwellwert ist (in 16).

5. Verfahren nach Anspruch 1, umfassend den Schritt der Tiefpaßfilterung des Signals mit niedrigerem Helligkeitsniveau gemäß einer normierten 1:2:1-Z-Transformation (Figur 3, in 22), wobei das Signal mit niedrigerem Helligkeitsniveau **dadurch** einer Zeitverzögerung unterzogen wird.

6. Verfahren nach Anspruch 5, umfassend den Schritt des Verzögerns des Signals mit höherem Helligkeitsniveau um die Zeitverzögerung (Figur 3, in 24).

7. Verfahren nach Anspruch 1, umfassend die folgenden Schritte:
Anwenden der Sparkle-Reduzierungsschritte auf ein Luminanzsignal (LUMA) für das Bild;
Verzögern (unter Verwendung von 36) Chrominanzsignalen für das Bild und
Erzeugen mehrerer Videoansteuersignale (R OUT, G OUT, B OUT) aus dem modifizierten Luminanzsignal und den verzögerten Chrominanzsignalen.

8. Verfahren nach Anspruch 7, umfassend die folgenden Schritte:
Anwenden (unter Verwendung von 10) der Sparkle-Reduzierungsschritte auf mindestens eines der Videoansteuersignale und
Verzögern (unter Verwendung von 36) aller nicht-Sparkle-reduzierten Videoansteuersignale.

9. Verfahren nach Anspruch 1, umfassend die folgenden Schritte:
Erzeugen (unter Verwendung von 32) mehrerer Videoansteuersignale (R OUT, G OUT, B OUT) aus Luminanz-Chrominanzsignalen;
Anwenden der Sparkle-reduzierten Schritte (unter Verwendung von 10) auf mindestens eines der Videoansteuersignale und
Verzögern (unter Verwendung von 36) aller nicht-Sparkle-reduzierten Videoansteuersignale.

10. Verfahren nach Anspruch 7, umfassend den Schritt des Anwendens der Sparkle-reduzierenden Schritte auf jedes der Videoansteuersignale.

11. Schaltung zum Reduzieren von Sparkle-Artefakten in einem Flüssigkristalldisplay, **gekennzeichnet durch**:
Mittel (12) zum Trennen eines Videosignals für ein Bild in ein Signal (HIGH) mit bezüglich einem Helligkeitsschwellwert (T) höheren Helligkeitsniveau und ein Signal (LOW) mit einem bezüglich des Helligkeitsschwellwerts (T) niedrigerem Helligkeitsniveau;
Mittel (22) zum Tiefpaßfiltern des Signals mit niedrigerem Helligkeitsniveau ;
Mittel (24) zum Verzögern des Signals mit höherem Helligkeitsniveau entsprechend einer von der Tiefpaßfilterung verursachten Verarbeitungsverzögerung und
Mittel (26) zum Verknüpfen des tiefpaßgefilterten Signals mit niedrigerem Helligkeitsniveau und des verzögerungsangepaßten Signals mit höherem Helligkeitsniveau, um ein modifiziertes Videosignal (OUTPUT X') zu erzeugen, das mit geringerer Wahrscheinlichkeit zu Sparkle-Artefakten in dem Display führt.

12. Schaltung nach Anspruch 11, wobei das Trennmittel umfaßt:
ein Register (in 14, 16) zum Speichern eines ausgewählten Schwellwerts (T) ;
einen Vergleicher (X>T, X<T, X=T) zum Vergleichen aufeinanderfolgender eingegebener Helligkeitsniveaus des Videosignals mit dem ausgewählten Schwellwert;
eine algebraische Schaltung zum Subtrahieren (X-T) des Schwellwerts von jedem einzelnen der eingegebenen Helligkeitsniveaus größer als der Schwellwert (X>T) ;
eine Beschneidungsschaltung zum Begrenzen des Schwellwerts von jedem einzelnen der eingegebenen Helligkeitsniveaus größer als der Schwellwert (IF X>T, L=T) ;
ein erstes Gatter zum Ausbreiten eines Helligkeitsniveaus mit Nullwert für jedes einzelne der eingegebenen Helligkeitsniveaus kleiner als der Schwellwert (X<T, H=O);
ein zweites Gatter zum Ausbreiten des eingegebenen Helligkeitsniveaus für jedes einzelne der eingegebenen Helligkeitsniveaus kleiner als der Schwellwert (IF X<T, L=X) und
das Signal (HIGH) mit höherer Helligkeit ausgebildet wird durch Ausgangssignale von der algebraischen Schaltung und dem ersten Gatter und das Signal (LOW) mit dem niedrigeren Helligkeitsniveau ausgebildet wird durch Ausgangssignale von der Beschneidungsschaltung und dem zweiten Gatter.

13. Schaltung nach Anspruch 12, wobei:
das Signal (HIGH) mit höherem Helligkeitsniveau ausgebildet wird durch das Ausgangssignal des ersten Gatters, wenn das eingegebene Helligkeitsniveau gleich dem Schwellwert ist (IF X=T, H=O) und
das Signal (LOW) mit niedrigerem Helligkeitsniveau ausgebildet wird durch das Ausgangssignal des zweiten Gatters, wenn das eingegebene Helligkeitsniveau gleich dem Schwellwert ist (IF X=T, L=X).

14. Schaltung nach Anspruch 11, wobei der Schwellwert einen Übergang zwischen Abschnitten einer mit dem Display assoziierten Gammatabelle mit niedrigerer und höherer Verstärkung betrifft.

15. Schaltung nach Anspruch 11, wobei das Mittel (22) für das Tiefpaßfiltern eine normierte 1:2:1-Z-Transformation auf das Signal mit niedrigerem Helligkeitsniveau anwendet, wobei das Signal mit niedrigerem Helligkeitsniveau **dadurch** einer Zeitverzögerung unterzogen wird.

16. Schaltung nach Anspruch 15, wobei das Signal mit höherem Helligkeitsniveau um die Zeitverzögerung verzögert wird.

17. Schaltung nach Anspruch 11, weiterhin umfassend:
Mittel (36) zum Verzögern von Chrominanzsignalen für das Bild und
Mittel (32) zum Erzeugen mehrerer Videoansteuersignale (R OUT, G OUT, B OUT) von einem modifizierten Luminanzsignal und den verzögerten Chrominanzsignalen.

## Revendications

1. Un procédé de réduction des artefacts de scintillement sur un écran à cristaux liquides, **caractérisé par** les étapes de :
division d'un signal vidéo (ENTREE X) pour une image en un signal de niveau de luminance supérieur (HAUT) et un signal de niveau de luminance inférieur (BAS) en comparant ledit signal vidéo à un seuil de luminance (T) ;
filtrage passe-bas (dans 22) dudit signal de niveau de luminance inférieur ;
retardement (dans 24) dudit signal de niveau de luminance supérieur pour correspondre à un retard de traitement induit par ledit filtrage passe-bas ; et,
combinaison (dans 26) dudit signal de niveau de luminance inférieur filtré passe-bas (BAS_{f}) et dudit signal de niveau de luminance supérieur adapté au retard (HAUTᵣ) pour générer un signal vidéo modifié (SORTIE X') moins susceptible d'entraîner des artefacts de scintillement sur ledit écran.

2. Le procédé de la revendication 1, comprenant l'étape de division dudit signal vidéo selon une transition entre des portions de gain inférieures et supérieures d'une table gamma associée audit écran.

3. Le procédé de la revendication 1, où ladite étape de division comprend les étapes de :
comparaison des niveaux de luminance d'entrée successifs dudit signal vidéo audit seuil de luminance ;
pour chacun desdits niveaux de luminance d'entrée supérieurs audit seuil dans ladite étape de comparaison, attribution audit signal de niveau de luminance supérieur d'un niveau de luminance égal à une différence entre ledit niveau de luminance d'entrée supérieur et ledit seuil (dans 14) et attribution audit signal de niveau de luminance inférieur d'un niveau de luminance égal audit seuil (dans 16) ; et,
pour chacun desdits niveaux de luminance d'entrée inférieurs audit seuil dans ladite étape de comparaison, affecter audit signal de niveau de luminance supérieur un niveau de luminance égal à zéro (dans 14) et affecter audit signal de niveau de luminance inférieur un niveau de luminance égal audit niveau de luminance d'entrée (dans 16).

4. Le procédé de la revendication 3, comprenant les étapes de :
attribution audit signal de niveau de luminance supérieur d'un niveau de luminance égal à zéro si ledit niveau de luminance d'entrée est égal audit seuil (dans 14) ; et,
attribution audit signal de niveau de luminance inférieur d'un niveau de luminance égal audit niveau de luminance d'entrée si ledit niveau de luminance d'entrée est égal audit seuil (dans 16).

5. Le procédé de la revendication 1, comprenant l'étape de filtrage passe-bas dudit signal de niveau de luminance inférieur selon une transformée en Z 1:2:1 normalisée (Figure 3, dans 22), ledit signal de niveau de luminance inférieur étant ainsi soumis à un retardement.

6. Le procédé de la revendication 5, comprenant l'étape de retardement dudit signal de niveau de luminance supérieur selon ledit retardement (Figure 3, dans 24).

7. Le procédé de la revendication 1, comprenant les étapes de :
application desdites étapes de réduction du scintillement à un signal de luminance (LUMA) pour ladite image ;
retardement (en utilisant 36) des signaux de chrominance pour ladite image; et,
génération d'une pluralité de signaux d'excitation vidéo (SORTIE R, SORTIE G, SORTIE B) à partir dudit signal de luminance modifié et desdits signaux de chrominance retardés.

8. Le procédé de la revendication 7, comprenant les étapes de :
application (en utilisant 10) desdites étapes de réduction du scintillement à au moins un desdits signaux d'excitation vidéo ; et,
retardement (en utilisant 36) de tous les signaux d'excitation vidéo non soumis à une réduction du scintillement.

9. Le procédé de la revendication 1, comprenant les étapes de :
génération (en utilisant 32) d'une pluralité de signaux d'excitation vidéo (SORTIE R, SORTIE G, SORTIE B) à partir de signaux de luminance et de chrominance ;
application desdites étapes de réduction du scintillement (en utilisant 10) à au moins un desdits signaux d'excitation vidéo ; et,
retardement (en utilisant 36) de tous les signaux d'excitation vidéo non soumis à une réduction du scintillement.

10. Le procédé de la revendication 7, comprenant l'étape d'application desdites étapes de réduction du scintillement à chacun desdits signaux d'excitation vidéo.

11. Un circuit permettant de diminuer des artefacts de scintillement sur un écran à cristaux liquides, **caractérisé par** :
un moyen (12) pour diviser un signal vidéo pour une image en un signal de niveau de luminance supérieur (HAUT) par rapport à un seuil de luminance (T) et un signal de niveau de luminance inférieur (BAS) par rapport à un niveau de luminance (T);
un moyen (22) pour filtrer passe-bas ledit signal de niveau de luminance inférieur ;
un moyen (24) pour retarder ledit signal de niveau de luminance supérieur pour correspondre à un retard de traitement induit par ledit filtrage passe-bas ; et,
des moyens (26) pour combiner ledit signal de niveau de luminance inférieur filtré passe-bas et ledit signal de niveau de luminance supérieur adapté au retard pour générer un signal vidéo modifié (SORTIE X') moins susceptible d'entraîner des artefacts de scintillement sur ledit écran.

12. Le circuit de la revendication 11, où ledit moyen de division comprend :
un registre (dans 14, 16) pour stocker une valeur de seuil (T) sélectionnée ;
un comparateur (X>T, X<T, X=T) pour comparer des niveaux de luminance d'entrée successifs dudit signal vidéo à ladite valeur de seuil sélectionnée ;
un circuit algébrique pour soustraire (X-T) ladite valeur de seuil de chacun desdits niveaux de luminance d'entrée supérieurs audit seuil (X>T) ;
un circuit d'écrêtage pour limiter à ladite valeur de seuil chacun desdits niveaux de luminance d'entrée supérieurs à ladite valeur de seuil (si X>T, L=T) ;
une première porte pour propager un niveau de luminance de valeur zéro pour chacun desdits niveaux de luminance d'entrée inférieurs à ladite valeur de seuil (si X<T, H=0) ;
une deuxième porte pour propager ledit niveau de luminance d'entrée pour chacun desdits niveaux de luminance d'entrée inférieurs audit seuil (si X<T, L=X); et,
ledit signal de luminance supérieur (HAUT) est formé par des sorties à partir dudit circuit algébrique et de ladite première porte et ledit signal de niveau de luminance inférieur (BAS) est formé par des sorties à partir dudit circuit d'écrêtage et de ladite seconde porte.

13. Le circuit de la revendication 12, où :
ledit signal de niveau de luminance supérieur (HAUT) est formé par ladite sortie de ladite première porte lorsque ledit niveau de luminance d'entrée est égal à ladite valeur de seuil (SI X=T, H=0) ; et,
ledit signal de niveau de luminance inférieur (BAS) est formé par ladite sortie de ladite deuxième porte lorsque ledit niveau de luminance d'entrée est égal à ladite valeur de seuil (SI X=T, L=X).

14. Le circuit de la revendication 11, où ladite valeur de seuil se rapporte à une transition entre des portions de gain inférieures et supérieures d'une table gamma associée audit écran.

15. Le circuit de la revendication 11, où ledit moyen (22) pour le filtrage passe-bas applique une transformée en Z 1:2:1 normalisée audit signal de niveau de luminance inférieur, ledit signal de niveau de luminance inférieur étant ainsi soumis à un retardement.

16. Le circuit de la revendication 15, où ledit signal de niveau de luminance supérieur est retardé selon ledit retardement.

17. Le circuit de la revendication 11, comprenant en outre:
un moyen (36) pour retarder des signaux de chrominance pour ladite image; et,
un moyen (32) pour générer une pluralité de signaux d'excitation vidéo (SORTIE R, SORTIE G, SORTIE B) à partir d'un signal de luminance modifié et desdits signaux de chrominance retardés.
